# EUROPEAN PATENT APPLICATION

(11) **EP 0 933 210 A2**
(43) Date of publication of application: **04.08.1999**
(21) Application number: 99300646.9
(22) Date of filing: 28.01.1999
(51) Int. Cl.: B41J 2/00, B41J 2/05

(54) **Method of alignment of imprints**

(30) Priority: 30.01.1998 GB 9802127
(71) Applicant: NEOPOST LIMITED, Romford, Essex RM1 2AR (GB)
(72) Inventor: Abumehdi, Cyrus, Harlow, Essex CM17 9PU (GB)
(74) Representative: Loughrey, Richard Vivian Patrick

(57) **Abstract**

A printer is disclosed in which a print head (10) is traversed in a manner to permit printing of an imprint of greater extent that the extent of a line of printing elements such as ink jet nozzles. The print head is first traversed along a first track (16) to print a first part (24) of the imprint and after displacement of the print head transverse to the first track, the print head is traversed along a second track (17) parallel to and displaced from the first track to print a second adjacent part (27) of the imprint. In order to obtain precise alignment of the two parts of the imprint, the displacement is of an extent such that the print head can print the parts of the imprint overlapping and print elements at an end of the line of elements are not operated, the number of unoperated elements being selected to obtain the required alignment of the parts of the imprint.

## Description

This invention relates to imprints printed by a print head and to alignment of imprints printed successively by the print head one with another.

Digital print heads are known in which a plurality of print elements are disposed in a line and are actuated selectively in a succession of print cycles. Selective actuation of the print elements in a print cycle effects printing of dots in corresponding selected locations in a column on a print receiving medium. The print heads may be wire dot printers in which a plurality of wires are selectively actuated by electromagnetic actuators to impact against an ink ribbon an print receiving medium. Other forms of digital print head include thermal print heads in which thermal printing elements are heated selectively by passage of an electric current to effect transfer of ink from an ink ribbon to a print receiving medium and ink jet print heads in which droplets of ink are ejected selectively from a row of nozzles onto the print receiving medium.

The print head is transported relative to the print receiving medium, or the print receiving medium is transported relative to the print head, in a direction perpendicular to the line of print elements so that the columns in which printing is effected in successive printing cycles are spaced in a direction perpendicular to the columns. A typical use for such print heads is in computer output printers. In computer output printers the print head is traversed horizontally across the width of a print receiving sheet of paper and after each traverse of the print head the paper is fed vertically to bring the print head into registration with a new horizontal strip on the paper. If the distance by which the paper is fed between each traverse is equal to the length of the line of print elements the dots printed in one horizontal traverse of the print head are correctly aligned, in a vertical direction, with respect to the dots printed in the immediately preceding horizontal traverse of the print head. As a result if the print head is utilised to print a pattern requiring more than one traverse of the print head the pattern will be correctly printed and it will appear as if the pattern has been printed in a single pass of a wide print head. However due to tolerances in manufacture of the print head and the mechanism for causing relative movement between the print head and the print receiving medium, the extent of movement may vary from the desired extent of movement and as a result misalignment of the dots forming the imprint may occur. The effect of an incorrect extent of movement in a vertical direction between successive horizontal traverses is that either the imprints resulting from successive traverses are spaced apart vertically so that it appears as if a row or rows of dots are missing or the imprints will overlap in a vertical direction resulting in a distortion of the imprint. The effect of incorrect movement in a horizontal direction is that the columns of dots printed in successive traverses are misaligned with the result that vertical lines printed by the print elements are not straight.

It is difficult to manufacture the components of the mechanism to have a sufficiently high precision to ensure a sufficiently high precision in location of the printed dots to produce a required good quality of imprint at a low cost.

According to one aspect of the invention a method of alignment of a first imprint printed in a first traverse along a first track by a print head having a plurality of selectively energisable printing elements disposed in a line with a second imprint printed in a second traverse along a second track displaced relative to said first track including the step of controlling operation of the printing elements in at least one of the traverses such that the second imprint is aligned with the first imprint in a direction transverse to said first and second tracks.

According to a second aspect of the invention printing apparatus includes a print head provided with a plurality of printing elements disposed in a line; traverse means operable to effect a relative traverse movement between the print head and a print receiving medium so that a part of a print field is traversed by the line of print elements in a first direction perpendicular to said line; index means operable to effect a relative index movement between the print head and the print receiving medium in a direction transverse to said first direction; control means to operate the traverse means to effect a first traverse of a first part of the print field, thereafter to operate the index means and to operate the traverse means to effect a second traverse of a second part of the print field; said control means being operable to control operation of the printing elements in the first traverse to print a first imprint and in the second traverse to print a second imprint adjacent said first imprint; and said control means being operable to control operation of the printing elements such as to shift the first and second imprints relative to one another so as to effect a desired alignment said imprints.

An embodiment of the invention will now be described hereinafter by way of example with reference to the drawings in which:-
- Figure 1: is a block diagram illustrating a digital print head and control circuits, and
- Figure 2: illustrates a transport mechanism for the print head, and
- Figure 3: illustrates positions of printing elements of the print head in successive traverses of the print head relative to a print field of a print receiving medium.

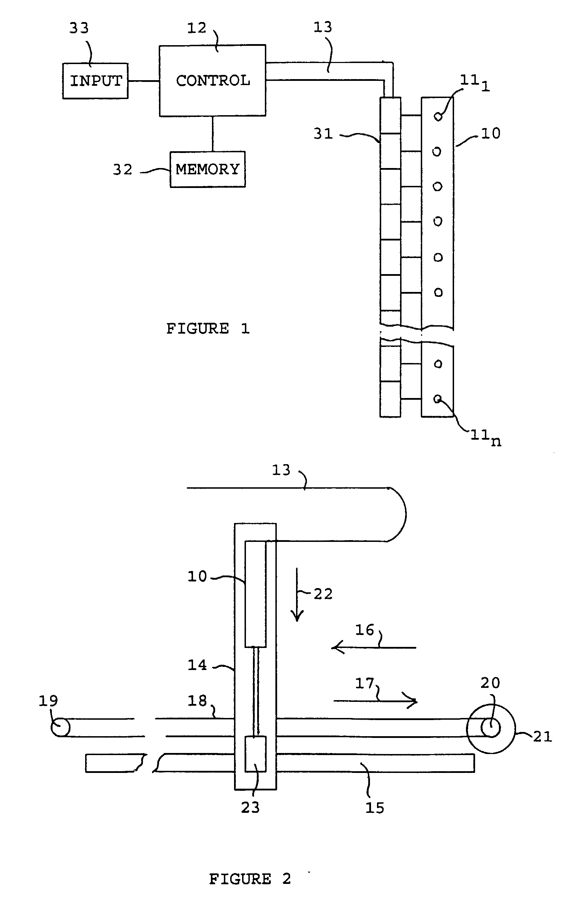

Referring to Figure 1 of the drawings, an ink jet print head 10 has a plurality of print elements comprising ink ejection nozzles 11₁ - 11 ₙ disposed in a vertical row (as seen in the drawing). The ink jet print head may be a bubble ink jet print head in which ink is ejected from the nozzles by passage of electric current through a resistive element corresponding to the nozzle. Bubble ink jet print heads and other forms of digital print heads are well known and it is believed to be unnecessary for the purposes of an understanding of this invention to provide a detailed explanation of the construction and operation of the print heads. It is sufficient to understand that the print elements are disposed in a line and are selectively operable to deposit dots of ink on a print receiving medium.

For clarity the print head is shown with only a relatively small number of nozzles. However it will be appreciated that in practice a much higher number of nozzles are provided. For example in a print head having a print height of 1/2 inch (12 cm) approximately 300 nozzles and corresponding resistive elements are provided.

When it is desired to print dots in desired selected positions in a column, a control circuit 12 outputs print control signals on lines 13 to cause operation of selected ones of the nozzles 11₁ - ₙ. The groups of the resistive elements for operation of the nozzles conveniently are connected in banks and operation of selected nozzles comprises selection of a bank and selection of nozzles with the selected bank.

The control circuit 12 successively outputs print control signals in a series of printing cycles while the print head 10 is traversed by a print head transport mechanism controlled by control circuit 14 relative to a print receiving medium thereby producing an imprint of a desired pattern in a column by column manner.

As shown in Figure 2 the print head 10 is mounted for traversal in a direction transverse to the line of nozzles. In addition the print head is mounted for indexing between two positions in a direction aligned with the line of nozzles whereby the print head may be utilised to print an imprint which is of greater extent than the length of the line of nozzles. The traversal and indexing of the print head may be effected by a transport mechanism as follows. The print head 10 is carried on a carriage 14 which is traversable along a guide rod 15 in a first direction indicated by arrow 16 and in a second direction, opposite to the first direction, indicated by arrow 17. Traversal of the carriage is effected by drive means which may comprise a belt 18 passing around an idler pulley 19 and a pulley 20 driven by a drive motor 21, the belt being secured to the carriage 14. In addition to traversal of the print head in the directions of arrows 16, 17, the print head is mounted on the carriage such that the print head can be indexed in a direction, indicated by arrow 22, transverse to the directions of arrows 16, 17. An indexing mechanism 23 carried on the carriage 12 and mechanically coupled to the print head 10 is operated to cause the print head to be displaced in the direction of arrow 22 by a distance which is slightly less than the extent of the line of nozzles 11₁ - 11ₙ. The indexing mechanism may be operated by the traversal of the print head carriage. During traverse of the carriage in the direction of arrow 16 the print head is located in a first position and during travrse of the print head carriage in the direction of the arrow 17 the print head is located in a displaced second position relative to the first position.

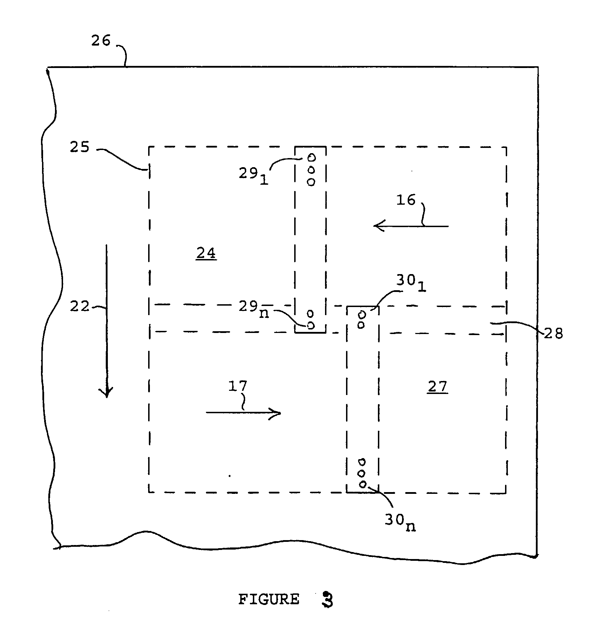

Referring to Figure 3, after a first traverse of a first part 24 of a print field 25 of a print receiving medium 26 by the print head in a first direction, indicated by arrow 16, the print head is indexed in a second direction, indicated by arrow 22, perpendicular to the first direction to align the print head with a second part 27 of the print field immediately adjacent to the first part 24 of the print field. A second traverse of the print head in a direction, indicated by arrow 17, opposite to the first direction is effected across the second part of the print field. It is desired that a second pattern of dots printed in the second part 27 of the print field during the second traverse of the print head is correctly and precisely aligned in the second direction with a first pattern of dots printed in the first part 24 of the print field during the first traverse of the print head. If the index movement in the second direction 22 is of too great an extent there is a gap, in a region 28 between the first and second patterns in which no printing is effected. If the index movement is of too small an extent the first and second traverses of the print head overlap in the region 28 and as a result the second pattern is printed overlapping the first pattern. Due to tolerances in manufacture of the print head and the indexing mechanism of the transport mechanism the location of the nozzles with respect to the print receiving medium, when the print head is aligned with the first part of the print field, relative to the location of nozzles with respect to when the print head is aligned with the second part of the print field may vary from the required precision. It will be appreciated that variation in location of the print head may also occur due to wear of components in the transport mechanism.

In order to allow for tolerances in the components of the printer the index movement of the print head relative to the print receiving medium is controlled to be less than the desired index movement so that the two parts 24, 27 of the print field 25 overlap to a small extent in the region 28. This overlap is indicated in Figure 3 of the drawings where 29₁ - 29ₙ indicate the positions of the nozzles of the print head in a first traverse in the direction 16 and 30₁ - 30ₙ indicate the positions of the same nozzles of the print head in the next succeeding traverse in the direction 17 after indexing of the print head. The overlap of the parts of the print field is of sufficient extent that with the maximum permitted tolerances of the components of the printer no gap will be present between the two parts of the print field. Generally, when the tolerances are less than the maximum permitted, in the second traverse of the print head the nozzles in some of the positions, for example, 30₁, 30₂ will traverse over a part of the print receiving medium which has already been traversed by nozzles in positions, for example 29ₙ₋₁, 29ₙ in the preceding traverse of the print head. Accordingly to allow for adjustment of the position of the pattern printed in one traverse with respect to the pattern printed in a preceding traverse some of the nozzles, at one or both ends of the row of nozzles, are not used and the corresponding resistive elements are not energised by print control signals. It will be understood that the position of one print pattern with respect to the preceding print pattern may be adjusted by shifting the position of print control signals in a string of print control signals and for example if the print control signals output by the control circuit 12 are stored in a buffer register 31 having storage locations corresponding to the nozzles of the print head, the print control signals may be shifted relative to storage locations of the register. This will have the effect of shifting the print pattern relative to the line of nozzles in a direction along the line of nozzles. This shifting of the string of print control signals may be accomplished by filling in the ends of the string with signals of binary value that do not effect selection and operation of selected ones of the nozzles locate at the end of the line of nozzles. Thus, in the example described hereinbefore, in the second traverse of the print head, nozzles corresponding to positions 30₁ and 30₂ are not operated and hence the imprints resulting from the two traverses of the print are aligned without any gap or overlap. Alternatively in the first traverse of the print head the nozzle corresponding to position 29ₙ is not operated and in the second traverse of the print head the nozzle corresponding to position 30₁ is not operated.

A memory 32 stores offset data determining shift or offset of the print control signals and for example may determine the number of digits of a binary value ineffective to cause operation of nozzles to be included at the beginning or the end of the binary string of print control signals. Initially the offset data is set at a default value. The control circuit 12 is then operated to cause the print head to print a test pattern in two successive traverses of the print receiving medium. The test pattern contains reference marks to enable an operator to determine any relative misalignment in both vertical and horizontal directions of the test patterns printed in the two successive traverses. After examination of the imprint of the two patterns on the print receiving medium, if there is misalignment in a vertical direction of the imprints resulting from the first traverse and the second traverse, the operator enters by means of input means 33, for example a keyboard, a signal to the control circuit 12 to modify the offset data in the memory 32 in such a manner as to correct the misalignment. If necessary the printing of the test pattern and the modification of the offset data may be repeated until the required alignment of the imprints has been obtained.

It will be appreciated that there may be misalignment in a horizontal direction, i.e. in a direction parallel to the traverses in directions 16, 17 of the print head, of the imprints printed in successive traverses of the print head over the print field. The relative location of the two imprints in the directions 16, 17 is determined by the time at which the resistive elements are operated to eject ink from the nozzles. Accordingly the location of one imprint relative to the other imprint in the directions 16, 17 can be varied by varying the timing of energisation of the resistive elements during one traverse of the print as compared with the timing of energisation during the other traverse of the print head. The memory 32 stores horizontal offset data determining the timing of the strobe pulses during one traverse relative to the timing of strobe pulses in the other traverse of the print head. Initially the offset data is set at a default value. If a printed test pattern indicates that the relative timing of the strobe pulses requires adjustment to bring the imprints into alignment, the operator controls the controller 12 by means of the input means 33 to modify the horizontal offset data to improve the alignment of the imprints.

It is to be understood that instead of traversing and indexing the print head relative to the print receiving medium, one or both of these relative movements may be effected by traversing or indexing the print receiving medium relative to the print head.

The print head is described hereinbefore as including resistive elements energisable to effect ejection of ink from the nozzles. It is to be understood that the print head may be provided with other means, for example piezoelectric elements operable to effect ejection of ink.

## Claims

1. A method of alignment of a first imprint printed in a first traverse (16) along a first track by a print head (10) having a plurality of selectively energisable printing elements (11) disposed in a line with a second imprint printed in a second traverse (17) along a second track displaced relative to said first track characterised by the step of controlling operation of the printing elements (11) in at least one of the traverses such that the second imprint is aligned with the first imprint in a direction (22) transverse to said first and second tracks.

2. A method as claimed in claim 1 including the step of providing a number of printing elements (11) greater than that required to print either one of said imprints and utilising a group of said printing elements less than said number to effect printing of at least one of the imprints.

3. A method as claimed in claim 1 or 2 wherein operation of the printing elements (11) is controlled by a group of print control signals, said print control signals corresponding to the printing elements; each group of print control signals comprising a set of first binary bits corresponding to the first imprint or the second imprint and including the step of including a selected number of second binary bits at an end of the group of print control signals, said second binary bits being ineffective to operate corresponding printing elements located at an end of the line of printing elements.

4. A method as claimed in claim 3 including the steps of printing a test pattern comprising the first and second imprints; and adjusting the number of second binary bits at the end of the group of print control signals to correct for any relative misalignment of the first and second imprints.

5. A method as claimed in any preceding claim including the step of adjusting timing of operation of the printing elements to adjust the relative location of the first and second imprints.

6. Printing apparatus including a print head (10) provided with a plurality of printing elements (11) disposed in a line; traverse means (14, 18, 21) operable to effect a relative traverse movement between the print head and a print receiving medium (26) so that a print field (25) is traversed by the line of print elements in a first direction perpendicular to said line; characterised by index means (23) operable to effect a relative index movement between the print head (10) and the print receiving medium (26) in a second direction (22) transverse to said first direction; the index means being operated after a first traverse of the print head in which a first part (24) of the print field is traversed by the print head so that in a second traverse of the print head a second part (27) of the print field is traversed; and control means operable to control operation of the printing elements in the first traverse to print a first imprint and in the second traverse to print a second imprint adjacent said first imprint; and said control means being operable to control operation of the printing elements such as to shift the first and second imprints relative to one another in the second direction so as to effect a desired alignment said imprints.

7. Printing apparatus as claimed in claim 6 wherein said control means (12) is operable under a software routine to effect the relative shifting of the imprints.

8. Printing apparatus as claimed in claim 6 or 7 wherein the control means (12) is operable to select a determined group of the plurality of printing elements (11) to print at least one of the imprints, printing elements not selected being inoperative to effect printing of the at least one imprint and wherein the control means is operable to vary the number of printing elements at one end of the line of printing elements that are not selected.
